# EUROPEAN PATENT APPLICATION

(11) **EP 2 506 256 A2**
(43) Date of publication of application: **03.10.2012**
(21) Application number: 12162297.1
(22) Date of filing: 29.03.2012
(51) Int. Cl.: G11B 7/0065

(54) **Multi-wavelength-holographic systems and methods**

(30) Priority: 31.03.2011 US 201113077675
(71) Applicant: General Electric Company, Schenectady, NY 12345 (US)
(72) Inventor: Ostroverkhov, Victor Petrovich, Niskayuna, NY New York 12309 (US); Ross, John Anderson Fergus, Niskayuna, NY New York 12309 (US); Natarajan, Arunkumar, Niskayuna, NY New York 12309 (US); McCloskey, Patrick Joseph, Niskayuna, NY New York 12309 (US); Chan, Kwok Pong, Niskayuna, NY New York 12309 (US); Kim, Evgenia Mikhailovna, Niskayuna, NY New York 12309 (US)
(74) Representative: Bedford, Grant Richard

(57) **Abstract**

A holographic system 10 for recording and reading information is provided. The system 10 includes at least one laser for providing a laser beam. The system also includes a subsystem 24 configured for multi-wavelength operation of said holographic system and recording micro-holograms at different wavelengths in substantially non-overlapping volumes of a holographic medium 12.

## Description

The invention relates generally to holographic devices, and more particularly to multi-wavelength holographic methods and systems.

Generally, holographic storage is the storage of data in the form of holograms, which are images of three dimensional interference patterns created by the intersection of two beams of light in a photosensitive storage medium. Both page-based holographic techniques and bit-wise holographic techniques have been pursued. In conventional volume holographic storage, or page-based holographic data storage, a signal beam, which contains digitally encoded data, is superposed on a reference beam within the volume of the storage medium. This results in a material modification, for example a chemical reaction, thereby, changing or modulating the refractive index of the medium within the volume. This modulation serves to record both the intensity and phase information from the signal. Each bit is therefore generally stored as a part of the interference pattern. The hologram can later be retrieved by exposing the storage medium to the reference beam alone, which interacts with the stored holographic data to generate a reconstructed signal beam proportional to the initial signal beam used to store the holographic image.

In bit-wise holography or micro-holographic data storage, every bit is written as a micro-hologram, or Bragg reflection grating, typically generated by two counter-propagating focused recording beams. The data is then retrieved by using a read beam to reflect off the micro-hologram to reconstruct the recording beam. Accordingly, micro-holographic data storage is more similar to current technologies than page-wise holographic storage. However, in contrast to the two or four layers of data storage that may be achieved in DVD and Blu-ray Disk formats by complex layer-by-layer production process, holographic disks may have multiple layers of data storage that are formed by optical beams in an otherwise homogeneous recording medium, providing data storage capacities that may be measured in terabytes (TB). Thus, in bit-wise holographic storage, high capacities of storage medium are achieved by filling the volume of the medium with layers of micro-holograms (Bragg reflectors) that represent ones and zeros of a data channel. The number of layers in a holographic disk is defined by interlayer spacing, which is restricted by signal cross talk, as the readout laser beam has to pass through the layer above and below the one it is addressing. The closer together the layers are, the more undesired signal reflected from the adjacent layers will be collected by a detector. Multiplexing techniques, such as angle multiplexing or wavelength multiplexing, utilize recording of multiple holograms into the same physical volume in the disc. This can be leveraged to increase storage capacity and potentially the data transfer rate, however, the approach puts additional burden on the material performance: the achievable refractive index change must be higher to support overlapping holograms with comparable diffraction efficiency.

To satisfy growing demands of data storage market and to ensure multi-generation technology roadmap, there is a need for holographic systems and methods for increasing the capacity of micro-holographic media.

In accordance with an embodiment of the invention, a holographic system for recording and reading information is provided. The system includes at least one laser for providing a laser beam. The system also includes a subsystem configured for multi-wavelength operation of said holographic system and recording micro-holograms at different wavelengths in substantially non-overlapping volumes of a holographic medium.

In accordance with an embodiment of the invention, an optical holographic medium is provided. The holographic recording medium includes multiple recording layers. The recording layers further include multiple micro-holograms recorded with multiple wavelengths in an interleaved manner in the optical holographic medium.

In accordance with an embodiment of the invention, a holographic system for processing information is provided. The system includes at least one laser for providing a laser beam. The system further includes a subsystem configured for multi-wavelength operation for retrieving data from a preformatted holographic medium and recording by modifying micro-holograms of the preformatted holographic medium.

In accordance with an embodiment of the invention, a method for processing information in a holographic medium is provided. The method includes directing multiple laser beams with multiple wavelengths. The method also includes providing a subsystem configured to switch between wavelengths and modulate the one or more laser beams. Finally, the method further includes recording adjacent micro-holograms in the holographic medium at different wavelengths.

Various features, aspects, and advantages of the present invention will become better understood when the following detailed description is read with reference to the accompanying drawings in which like characters represent like parts throughout the drawings, wherein:
FIG. 1 illustrates a system for processing information of a multilayer optical holographic data storage medium in accordance with an embodiment of the invention.
FIG. 2 illustrates a flow chart of a method of processing information for increasing the storage data capacity of a holographic medium in accordance with an embodiment of the invention.
FIG. 3 illustrates a plot of a normalized reflectivity of plane-wave hologram versus wavelength of readout beam in accordance with an embodiment of the invention.
FIG 4 shows another non-limiting example of a representation depicting calculated wavelength detuning curves for a micro-hologram at various numerical apertures (NA) in accordance with an embodiment of the invention.
FIG 5 shows full width at half maximum of the detuning curves as a function of numerical apertures (NA) for a micro-hologram in accordance with an embodiment of the invention.
FIG 6 shows a non-limiting example of a wavelength detuning curve for a hologram recorded in a NA=0.16 static test system in accordance with an embodiment of the invention.
FIG. 7 is a plot for confocal reflectivity readout versus depth displacement of readout beam in accordance with an embodiment of the invention.
FIG. 8 is a non-limiting example of an experimental result showing measured sensitivity derived from micro-hologram recording performed at different wavelength in accordance with an embodiment of the invention.
FIG.9 shows an arrangement of a simultaneous readout of adjacent layers with different wavelengths using different detectors in accordance with an embodiment of the invention.
FIG. 10 shows another arrangement of simultaneous detection of adjacent multi-wavelength layers in accordance with an embodiment of the invention.
FIG. 11 shows an arrangement of multiple wavelength recording in a single layer in accordance with an embodiment of the invention.

As discussed in detail below, embodiments of the invention are directed towards multi-wavelength holographic methods and systems for increased data storage capacity in storage mediums. As used herein, the term 'index profile grating' or 'gratings' refers to micro-holograms located in the holographic storage medium or disk.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Further, the term 'processing' may refer to reading or recording or rewriting or retrieving of data from a holographic data storage system. Any examples of operating parameters are not exclusive of other parameters of the disclosed embodiments.

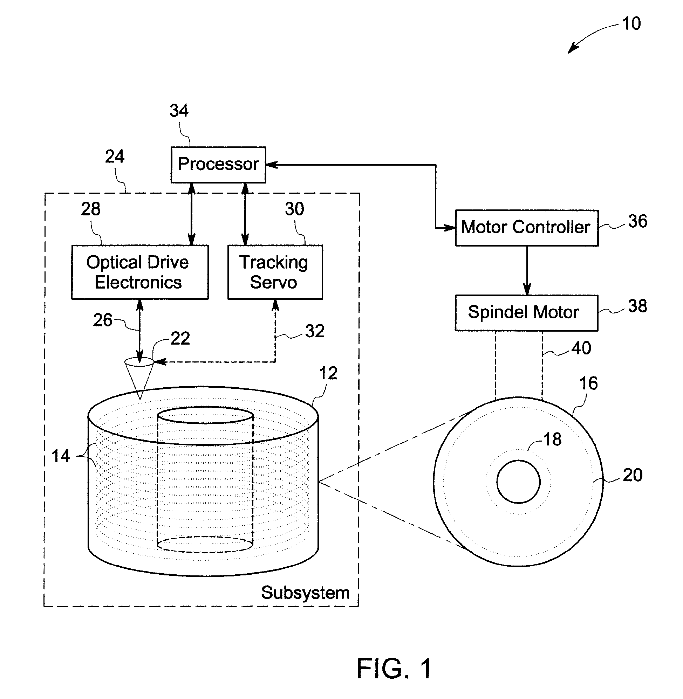

FIG. 1 illustrates a system 10 for processing information of an optical data storage medium 12 in accordance with an embodiment of the invention. As shown, the volume of the optical data storage medium 12 includes multiple layers 14. The multiple layers 14 include microholographic symbols arranged in multiple data tracks spiraling around the centre of the optical data storage medium 12. In a non-limiting example, optical data storage medium 12 includes a plastic substrate having multiple volumes arranged along the multiple data tracks in multiple vertically stacked, laterally extending layers; and multiple micro-holograms each substantially contained in a corresponding one of the volumes. The presence or absence of a micro-hologram in each of the volumes is indicative of a corresponding portion of data stored. As shown, one of the layer 16 of the optical data storage medium 12 includes an inner track 18 and an outer track 20 further including multiple tracks in between (not shown). The system 10 further includes a laser in communication with a pick-up head device 22 for providing a laser beam onto the optical data storage medium 12 for recording and retrieving information. In one embodiment, the laser is a wavelength blue-violet laser. In another embodiment, the system 10 may include one or more pick-up head devices 22 with optical lenses for processing information at a higher rate. The one or more pick-up head devices 22 are configured for recording or reading information from the optical data storage medium 12 through one or more optical paths.

To achieve a high data storage density in the data storage medium 12, the system 10 includes a subsystem 24 that is configured for multi-wavelength operation, thereby recording adjacent micro-holograms in the optical data storage medium 12 at different wavelengths. The subsystem 24 includes a series of optical elements (not shown) for projecting the laser beam onto the optical data storage medium 12. A reflected beam is picked up from the optical data storage medium 12 by one or more optical detectors (not shown). In one embodiment, the one or more detectors include in-phase and quadrature phase (I/Q) detectors for simultaneously reading of multiple layers of the optical data storage medium 12. In another embodiment, the pick up head device 22 may include any number of different elements designed to generate excitation beams, focus the beams on the optical data storage medium 12, and detect the reflection beam coming back from the optical data storage medium 12. The pick up head devices 22 are controlled through a coupling 26 to an optical drive electronics package 28. The optical drive electronics package 28 may include units such as power supplies for one or more laser systems, detection electronics to detect an electronic signal from the detector, analog-to-digital converters to convert the detected signal into a digital signal, and other units such as a bit predictor to predict when the detector signal is actually registering a bit value stored on the optical data storage medium 12.

The location of the pick up head device 22 over the optical data storage medium 12 is controlled by a focus and tracking servo 30 which has a mechanical actuator 32 configured to move the pick up head device 22 in axial and radial directions in relation to the optical data storage medium 12. The optical drive electronics package 28 and the tracking servo 30 are controlled by a processor 34. The processor 34 is responsive to the data detected by the pick-up head 22 and is capable of sending a location signal and coordinating the movement of the one or more pick-up heads 22. In some embodiments in accordance with the present techniques, the processor 34 may be capable of determining the position of the pick up head device 22, based on sampling information that may be received by the pick up head device 22 and fed back to the processor 34.

The subsystem 24 uses the multi-wavelength approach to record or retrieve micro-holograms using multiple wavelengths in an interleaved manner in the optical data storage medium 12. More particularly, the subsystem 24 records or retrieves micro-holograms using multiple different wavelengths in adjacent layers of the optical data storage medium 12. In another embodiment, the subsystem 24 records or retrieves micro-holograms using multiple different wavelengths in adjacent tracks of the optical data storage medium 12. Further, in one embodiment, the subsystem 24 is configured for recording or reading adjacent micro-holograms with multiple different wavelengths in a single track of any layer of the optical data storage medium 12.

Furthermore, the processor 34 also controls a motor controller 36, which provides power to a spindle motor 38. The spindle motor 38 is coupled to a spindle 40 that controls the rotational speed of the optical data storage medium 12. It should be noted that embodiments of the invention are not limited to any particular processor for performing the processing tasks of the invention. The term "processor," as that term is used herein, is intended to denote any machine capable of performing the calculations, or computations, necessary to perform the tasks of the invention. The term "processor" is intended to denote any machine that is capable of accepting a structured input and of processing the input in accordance with prescribed rules to produce an output. It should also be noted that the processor may be equipped with a combination of hardware and software for performing the tasks of the invention, as will be understood by those skilled in the art. It should be understood that it is within the scope of this invention that bit wise holographic recording and retrieval system can be used either in single integrated system or individually.

In one embodiment, a holographic system for processing information is provided. Such a holographic system, in a non-limiting manner, may include a holographic disc player/recorder that is used by a user. The system includes at least one laser for providing a laser beam. The system further includes a subsystem configured for multi-wavelength operation for retrieving data from a preformatted holographic medium and recording by modifying micro-holograms of the preformatted holographic medium. The subsystem is configured to record data using a single-wavelength high power laser source. Further, the subsystem retrieves data using one or more low power laser sources with tunable wavelength functionality.

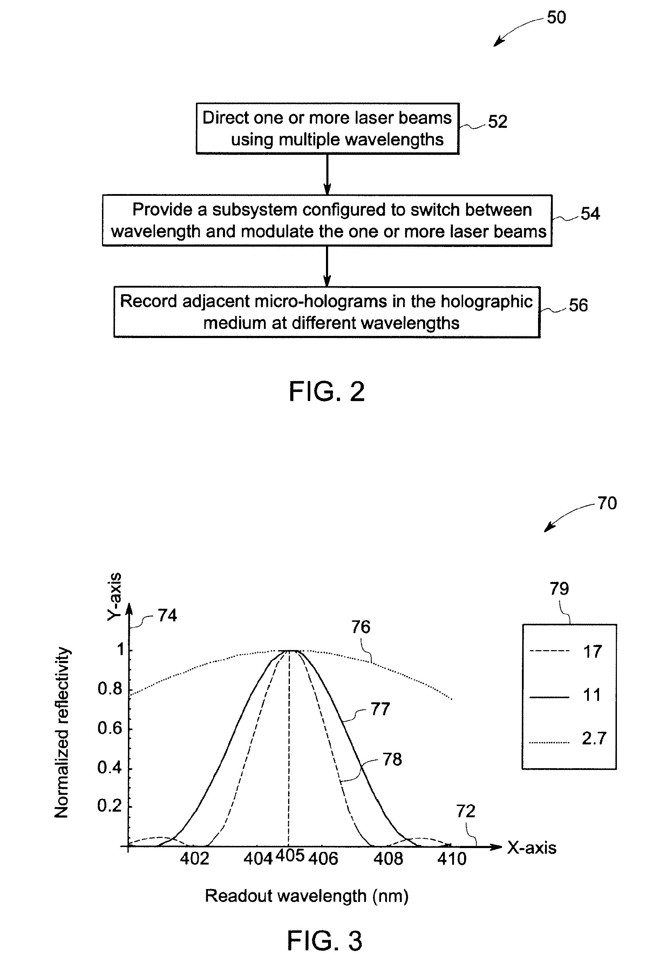

FIG. 2 illustrates a flow chart of a method 50 of processing information for increasing the storage data capacity of a holographic medium in accordance with an embodiment of the invention. At step 52, the method includes directing one or more laser beams with a plurality of wavelengths. The method also includes providing a subsystem configured to switch among different wavelengths of the laser beams and modulate the laser beams at step 54. Further, at step 56, the method includes recording adjacent micro-holograms in the holographic medium at different wavelengths. The method includes recording a first set of layers having micro-holograms with a first wavelength and recording a second set of layers having micro-holograms in an interleaved manner using a second wavelength. In one embodiment, the method includes a single sided recording in a preformatted holographic medium using a single-wavelength high power laser source. The holographic medium may be a pre-formatted holographic medium or a pre-recorded holographic medium. In another embodiment, the method of processing information also includes reading and data tracking from the preformatted holographic medium using a low power laser source with multi-wavelength functionality. Also, the method includes tracking and transferring information from the holographic medium using multiple readout laser beams corresponding to wavelengths used during recording. In one embodiment, the tracking and transferring information from the multiple layers of the holographic medium is carried out using a two-wavelength detector. Thus, the present invention advantageously provides for increase in the capacity of the holographic medium by utilizing selectivity of a micro-hologram reflectivity to a wavelength of the readout beam versus the recording beam.

FIG. 3 illustrates a non-limiting example of a plot 70 for a normalized reflectivity (diffraction efficiency) of plane-wave hologram versus wavelength of readout beam in accordance with an embodiment of the invention. The X-axis represented by 72 depicts readout wavelength in nanometer (units). The Y-axis represented by 74 depicts normalized reflectivity. It is to be understood that the reflectivity of an index-profile grating (hologram) is governed by wave-coupling theory, which describes diffraction efficiency (reflected signal strength) as a function of the grating parameters, wavelength of laser beam, and readout geometry of a holographic system. The micro-holograms are periodic 3-dimensional structures, therefore the holograms' reflectivity is highly selective to the wavelength of the readout laser beam. In a counter-propagating geometry of the holographic system, wherein the micro-holograms are recorded in the bit-wise approach, the index profile of the micro-hologram reflector follows an interference fringe pattern created by two counter-propagating coherent recording laser beams focused into a same location in the holographic medium. When such a grating is read out in the counter-propagating geometry of the holographic system, the diffraction efficiency or reflectivity of this grating is the highest when the laser beam used for the readout is of the same wavelength as the one used for the recording. On the other hand, the reflectivity of this grating falls off rapidly as the readout wavelength laser beam deviates from the recording wavelength laser beam. As shown in the plot 70 of FIG. 3, the curves 76, 77, 78 depict normalized reflectivity for various wavelengths for a micro-hologram recorded at a wavelength of 405 nm. Each of the curves 76, 77, 78 shows reflectivity for different thickness (shown in block 79 in micron units) of the microhologram that is recorded at the wavelength of 405 nm. The plot 70 clearly shows that the reflectivity drops rapidly as the readout wavelength deviates from the recording wavelength of 405 nm.

It is to be noted that the distance between adjacent data layers or tracks in a holographic medium defines the eventual data capacity of the medium. This data capacity is limited by cross-talk between the signals (reflections) generated by the different layers or tracks. When the layers or tracks are too tightly spaced, the readout beam focused on the layer or track that is being read is partially reflected from the adjacent layers or tracks, and these secondary reflected beams partially reach the detector and interfere with the signal from the main read layer or track, thereby, increasing error rate. When the adjacent layers or tracks are recorded using a slightly different wavelength than the main layer or track, the reflections from the adjacent layers or tracks that occur upon the readout of the main layer or track are suppressed due to the wavelength mismatch that exists between the readout and recording light for the adjacent layers or tracks. This reduces the interlayer cross-talk and allows closer positioning of layers or tracks to increase usable data capacity of the holographic medium.

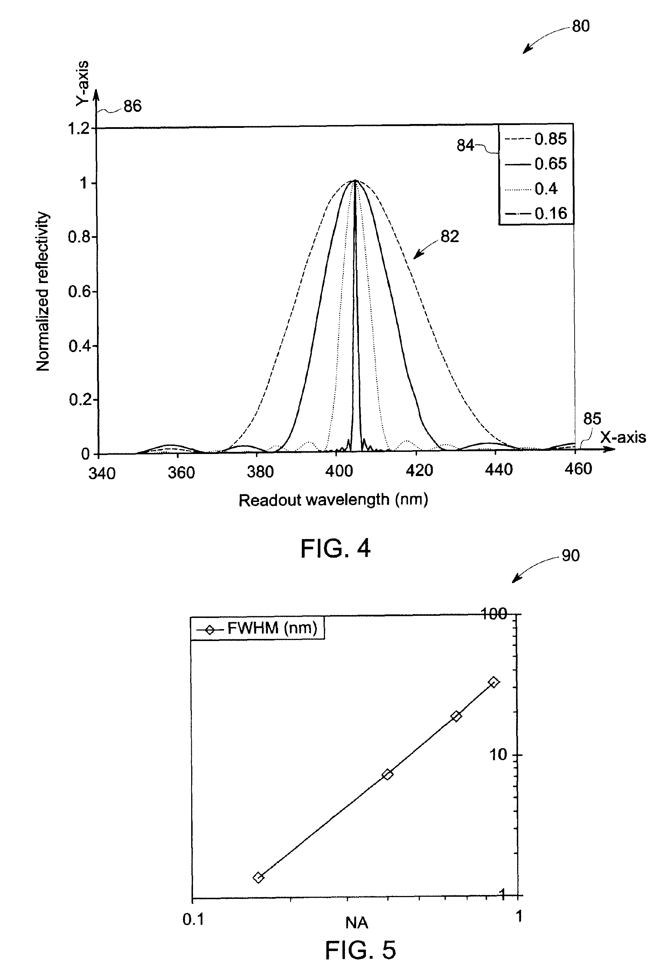

FIG. 4 shows another non-limiting example of a representation 80 for a normalized reflectivity of plane-wave hologram versus wavelength of readout beam. This representation 80 depicts calculated wavelength detuning curves 82 corresponding to various numerical apertures shown in block 84 for a micro-hologram recorded at a wavelength (405nm). The X-axis represented by 85 depicts readout wavelength in nanometer (units). The Y-axis represented by 86 depicts normalized reflectivity. This representation 80 further illustrates the concept of wavelength selectivity (Bragg selectivity) by micro-holograms and its dependence on the hologram dimensions. The reflectivity signal from a single micro-hologram illuminated by a single readout beam focused at the center of the hologram is maximum when the readout wavelength exactly matches the wavelength used to record the hologram. This occurs because the hologram fringes are spaced to result in a constructive interference among beams reflected from different fringes, producing the strongest reflected signal. Whereas, for a different readout wavelength, the fringe spacing is not matched so that the waves reflected from different hologram fringes partially cancel each other and the reflected signal strength is diminished. This Bragg selectivity depends on the thickness of the grating or hologram, which can be related to the number of refractive index fringes in the grating or hologram. In micro-hologram geometry, this is related to the numerical aperture (NA) of the optics used to record and readout the hologram. As shown in FIG. 4 the detuning curves 82 are calculated for micro-holograms recorded at several different NA of the optical systems. A higher NA results in a shorter micro-hologram (having fewer reflecting fringes), which leads to a broader detuning curve.

FIG 5 shows a representation 90 depicting a full width at half maximum of the detuning curves (shown as 82 in FIG. 4) as a function of numerical apertures (NA) for a micro-hologram.

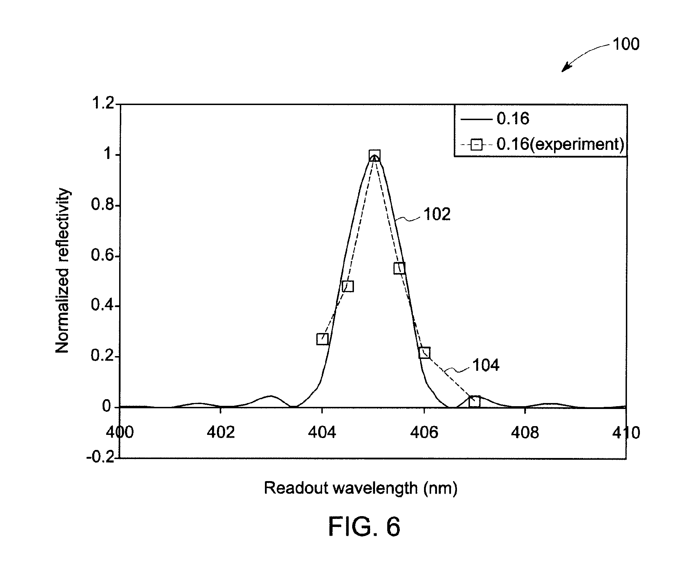

FIG 6 shows a non-limiting example of a representation 100 depicting a wavelength detuning curves 102, 104 for a hologram recorded in a static test system in accordance with an embodiment of the invention. The representation 100 shows the wavelength-detuning curve 102 calculated for a microhologram recorded at wavelength of 405nm and corresponding to a numerical aperture of 0.16. The representation 100 also shows the experimental detuning curve 104 obtained in a NA=0.16 system for a microhologram recorded at wavelength of 405nm.

High NA is necessary to achieve small micro-hologram size and high capacity of the storage medium. Higher NA optics allows creating smaller micro-holograms, which can be placed closer together both laterally and in depth, resulting in higher data density. A non-limiting example includes a system operating at NA=0.85 that may allow to achieve about 1Terabyte of data in a CD sized disk medium by accommodating about 40 or 50 layers of micro-holograms. In this case, the capacity may still be limited by the minimum interlayer spacing, which is dictated by the reflected signal interlayer cross-talk. However, the wavelength detuning curve for a high-NA system is substantially broader than in a low-NA system, as illustrated in FIG 6, therefore the wavelengths of operation should be chosen to be appropriately apart from each other.

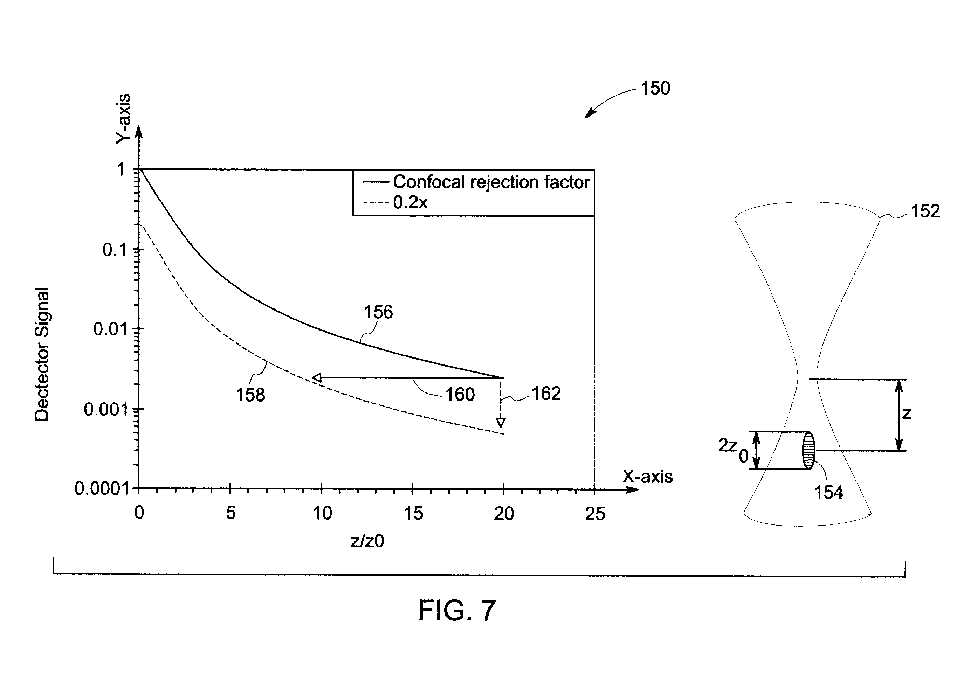

FIG 7 shows a plot 150 for confocal reflectivity readout (detective signal) versus depth displacement of readout beam in accordance with an embodiment of the invention. The readout beam is depicted by a representation 152 that further shows a microhologram 154 located at a distance 'z' from the readout beam focal spot. As shown, the size of the microhologram is 2z₀ wherein z₀ is the Rayleigh parameter of the readout beam. Thus, the plot 150 shows a typical normalized reflectivity (detective signal) of a hologram as seen by a confocal detector (Y-axis) versus an axial offset, (z/z0 in the X-axis) of the readout beam focal spot from the center of the hologram. At z/z0=20, the curve 156 shows reflectivity of about 0.3% of the peak value.

Furthermore, if the readout is done with the beam of a wavelength different from the recording beam (for example at 435nm versus 405 nm recording in FIG. 4), the reflectivity at the peak is reduced by about 5 times (at NA=0.85). If the readout beam is shifted away from the data layer, the reflectivity drops even further, following the curve 158 in FIG. 7. Therefore, alternating the recording wavelength between adjacent layers allows significant reduction in layer spacing, while preserving the same level of interlayer cross-talk (dotted arrow 160). Alternatively, one can reduce the interlayer cross-talk while preserving the inter-layer spacing (dashed arrow 162), which results in a lower bit error rate (BER) and allows for less coding overhead and higher useful capacity of the medium.

In one embodiment, a pre-recorded medium with multiple wavelengths (as described above) carries different part of content on different sub-sets of layers with common wavelength. A non-limiting example includes a holographic recording medium having one or more layers that carry basic content (such as a movie) recorded at a first wavelength and remaining layers having an extended content recorded or readout by a holographic system based on multi-wavelength functionality. The extended content may be stored on the satellite-wavelengths layers (such as extra scenes, 3D content, alternate view angles). In a non-limiting example, the basic content is read on a simple single-wavelength player device and extended content is accessible by devices with multi-wavelength capability. This approach offers backward compatibility of media to early-generation devices used at lower capacity, and offers a route to multi-generation media with significant generation increase of capacity per medium via increase of hardware complexity.

In another embodiment a multi-wavelength recording is performed within the same layer, for example interleaved adjacent tracks are recorded at different wavelengths. This can improve inter-track cross-talk and result in better BER and higher useful capacity. Furthermore, in one embodiment, the optical holographic recording medium includes a preformatted holographic medium used for a single sided recording with a single-wavelength high power laser source of a holographic device at a user end. The holographic device retrieves or tracks data using a low power laser source with multiple wavelength functionality.

Furthermore, it is to be noted that in the present invention, the holographic medium that is used for multi-wavelength recording includes a material that demonstrates comparable sensitivity at varying intensity of laser beams with different wavelengths. In a non-limiting example, one such material of the holographic medium for multi-wavelength recording includes a composition of Polyvinylcinnamate (PVCm) and a Bis(1-ethynyl-4-(phenylethynyl)benzene) bis(triphenylphosphine)Pd (II) (Pd-PE2). The Organic formulae of Pd-PE2 is given by

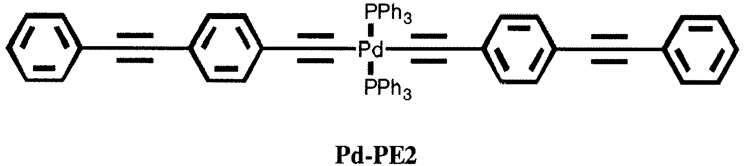

In a non-limiting example, the material (Pd-PE2) is prepared by adding 4-ethynyl diphenyl phenyl acetylene (0.202 grams, 0.001 mole), Bis-(tributylphosphine)palladium dichloride (0.350 grams, 0.0005 moles), and copper (I) iodide (0.010 grams) to a 250 mL round bottom flask. This mixture is stirred in 25 mL of diethylamine at room temperature under nitrogen for 18 hrs. The diethyl amine is then removed under vacuum and the residue is dissolved in methylene chloride (5 mL) and purified by silica gel chromatography (hexanes-ethyl acetate, 10:1) to provide 0.130 grams of pale yellow solid (Pd-PE2). The proton nuclear magnetic resonance (NMR) spectroscopy details of the material are as follows:¹H NMR 0.97, t (18H), 1.45 m (12H), 1.63 m (12H), 2.05 m (12H), 7.10 m (6H), 7.30-7.45 m (8H), 7.93 m (4 H). Further during the experiment, the Ultraviolet-visible spectroscopy absorption data for Pd-PE2 is given by the following table:

| **Pt-Complex** | **λₘₐₓ/nm^{a}** | **εₘₐₓ/M⁻¹cm^{-1a}** | **ε₄₀₅ₙₘ/M⁻¹cm^{-1b}** |
|---|---|---|---|
| Pd-PE2 | 346 | 133380 | 10 |

wherein, λₘₐₓ [wavelength at which the dye molecule Pd-PE2 has the maximum absorption] and εₘₐₓ [symbol stands for extinction coefficient of the dye molecule Pd-PE2] were measured in methylene chloride for Pd-PE2. The extinction coefficient at 405 nm is calculated using concentrated solutions (∼10⁻²-10⁻³M).

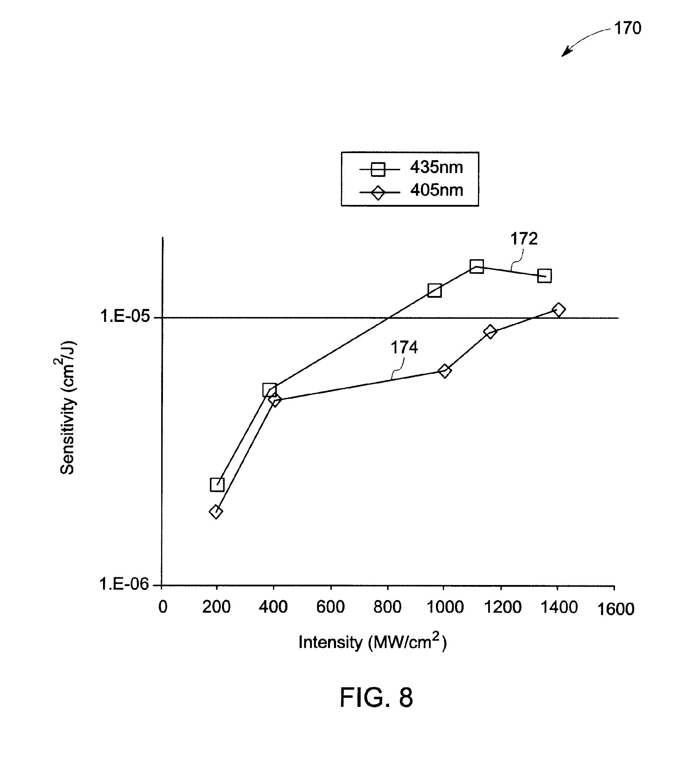

Further, thin film samples of Pd-PE2/PVCm is made by preparing a solution of Polyvinylcinnamate (1 g), 4.0 wt% (0.04M) of Pd-PE2 using dichloroethane/methylene chloride solvent mixture (15g, 2:8 v/v) as solvent. The solution is filtered using 0.45 µm filter, poured onto a glass rim (5 cm diameter) on a glass plate setup and dried on a hot plate maintained at about 45°C for 5 hours and at about 55°C overnight. After drying on a hot plate, the films are removed from the glass plates and vacuum dried at 60°C for 6 hours. This prepared film of holographic medium demonstrates comparable sensitivity at varying intensity of laser beams with different wavelengths as shown in FIG. 8.

A non-limiting example of an experimental result 170 of measured sensitivity derived from micro-hologram recording performed on the prepared holographic film (PVC/Pd-PE2 (2% doped)) is illustrated in FIG. 8. Here, sensitivity is defined as amount of photo-induced refractive index change Δn divided by the recording optical fluence F (optical energy delivered per unit cross-section area and measured in J/cm²): S = Δn/F. The recording is carried out at 405nm and 435nm wavelength shows the respective curves 172 and 174. The comparable sensitivity of the curves 172, 174 signifies the material capability to support recordings of micro-holograms at different wavelengths at adjacent locations in the prepared holographic film. In a non-limiting manner, the prepared holographic film is responsive to recording wavelengths ranging from about 350nm to about 450nm.

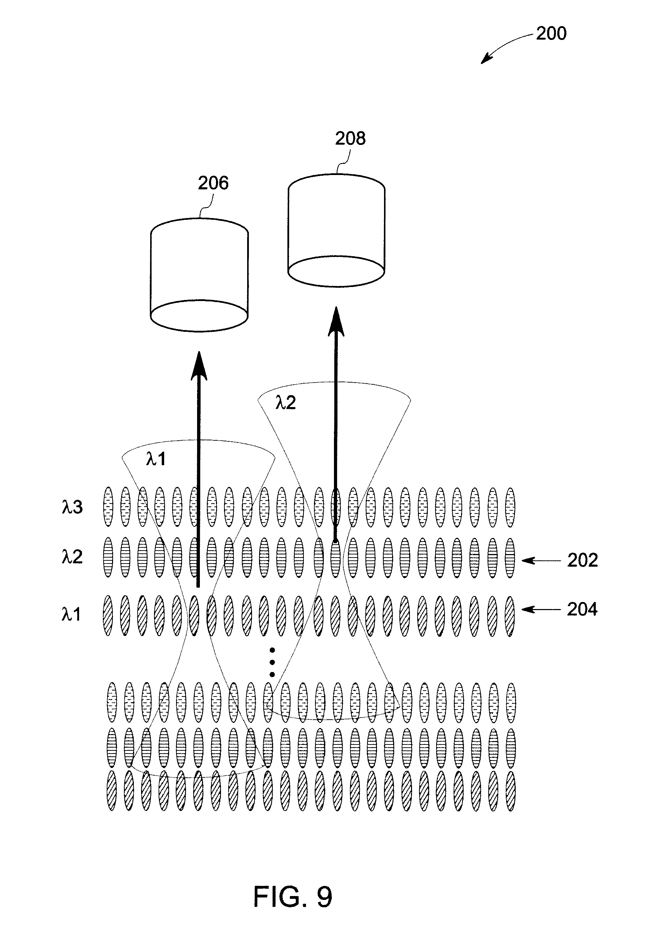

FIG.9 shows an arrangement 200 of a simultaneous readout of adjacent layers 202, 204 with different wavelengths λ1, λ2 without inter-layer cross talk in accordance with an embodiment of the invention. In this embodiment, multiple detectors 206, 208 use two different optical lenses for readout at wavelengths λ1 and λ2 of holographic data layers having microholograms recorded at wavelengths λ₁ and λ2 respectively.

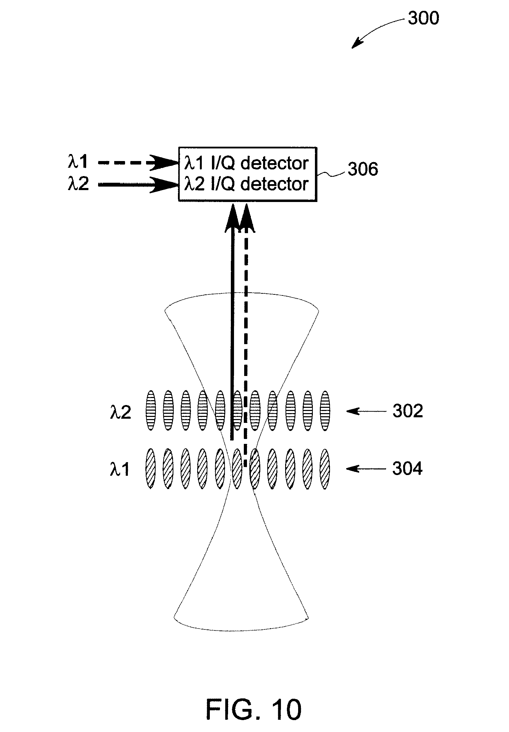

FIG. 10. shows an arrangement 300 of simultaneous detection of adjacent multi-wavelength layers 302, 304 in accordance with an embodiment of the invention. In this embodiment, a two-wavelength in-phase and quadrature (I/Q) detector 306 is employed to detect the compressed layers 302, 304 via a single optical path.

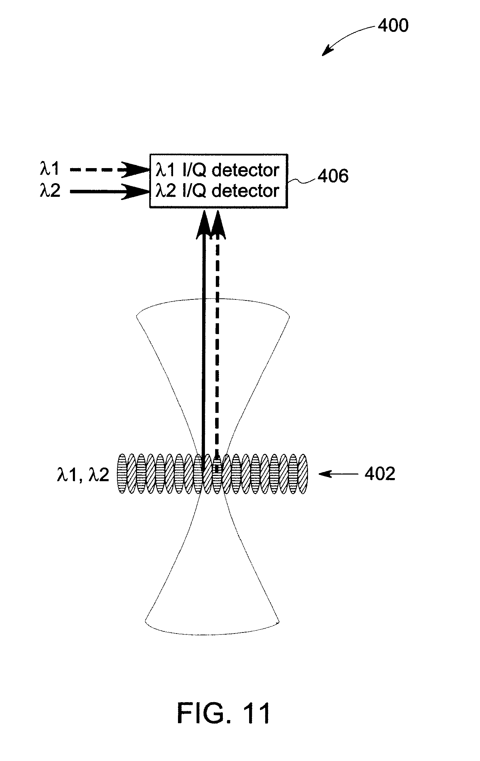

FIG. 11 shows an arrangement 400 of multiple wavelength recording in a single layer 402 of a holographic medium in accordance with an embodiment of the invention. The symbols recorded at different wavelengths may be located in adjacent parallel track of the same layer, or within the same track in said layer. In this embodiment, a detector 406 detects more than one wavelength on a single layer 402. In a non-limiting example, a modulator used in this arrangement 400 may choose from three symbols {no microhologram, microhologram at wavelength 1, microhologram at wavelength 2}. It is to be noted that a three-symbol alphabet has potential information content of 1.58 information bits per symbol versus 1 information bit per symbol in a two-symbol alphabet. Thus, this arrangement 400 shows the parallel read system for a single layer 402 with multiple wavelength symbols λ1, λ2.

In another embodiment, a single layer of the holographic medium employs two two-symbol alphabets, {0, microhologram at wavelength 1} ("alphabet P") and {0, microhologram at wavelength 2} ("alphabet Q") to minimize the cross-talk. It is to be noted that adjacent symbols are chosen from different alphabets to minimize cross talk. A detector similar to the detector 406 (as shown in FIG. 10) is also applicable to this method.

It should be understood that even though some of the discussed examples refer to two different wavelength, the current embodiments can be broadened for the case of more than two wavelengths.

Advantageously, the present method and system enables increased data storage in a holographic data storage medium. The present method and system also enables easy and rapid processing of information. Various aspects of the present invention further enable the retrieval of information rapidly by minimizing the cross talk between adjacent microholograms in adjacent layers or tracks. Another advantage of the present method is the ability to use the same disc media in a multi-generation technology by adding capacity via added multi-wavelength capability to more advanced generation of the product, while leaving the basic single-wavelength structure the same and backward compatible with early generations. Yet another application opportunity may be in pre-recorded content distribution, where core content could be recorded to be accessible with all single-wavelength devices, while extended content carried by the alternate wavelength(s) recording would only be accessible by advanced devices.

Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional systems and techniques in accordance with principles of this disclosure. Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A holographic system for recording and retrieving information comprising:
   at least one laser for providing a laser beam; and
   a subsystem configured for multi-wavelength operation of said holographic system and recording micro-holograms at different wavelengths in substantially non-overlapping volumes of a holographic medium.
2. The system of clause 1, wherein the laser is a wavelength tunable blue-violet laser.
3. The system of any preceding clause, further comprising: a controller; a plurality of laser sources; a plurality of optical elements and a plurality of detectors for recording or readout.
4. The system of any preceding clause, wherein the plurality of detectors comprise in-phase and quadrature phase (I/Q) detectors for reading of a plurality of layers of the holographic medium.
5. The system of any preceding clause, wherein the subsystem is further configured for recording micro-holograms with a plurality of wavelengths in an interleaved manner in the holographic medium.
6. The system of any preceding clause, wherein the subsystem is further configured for recording micro-holograms with a plurality of different wavelengths in adjacent layers of the holographic medium.
7. The system of any preceding clause, wherein the subsystem is further configured for recording micro-holograms with a plurality of different wavelengths in adjacent tracks in a layer of the holographic medium.
8. The system of any preceding clause, wherein the subsystem is further configured for recording adjacent micro-holograms with a plurality of different wavelengths in a single track of any layer of the holographic medium.
9. The system of any preceding clause, further comprising one or more of pick-up head devices with optical elements for reading and recording information from the holographic medium.
10. The system of any preceding clause, wherein the one or more of pick-up head devices include lasers for directing one or more laser beams with a plurality of wavelengths through one or more optical paths.
11. An optical holographic medium comprising:
   a plurality of recording layers; and
   a plurality of micro-holograms recorded with a plurality of wavelengths in an interleaved manner in the optical holographic medium.
12. The optical holographic medium of any preceding clause, wherein the plurality of recording layers comprises one or more recording layers having a main data content recorded at a first wavelength and remaining layers includes an extended content recorded with a plurality of different wavelengths, wherein the holographic recording medium is read by a holographic system based on multi-wavelength functionality.
13. The optical holographic medium of any preceding clause, wherein each of the recording layers comprises multi-wavelength micro-holograms with a multi-symbol alphabet arrangement for minimizing cross-talk.
14. The optical holographic medium of any preceding clause, wherein each of the recording layers comprises multi-wavelength tracks for minimizing inter-track cross-talks.
15. The optical holographic medium of any preceding clause, wherein at least one of the recording layers is recorded at a wavelength different from the adjacent recording layers for minimizing inter-layer cross-talks.
16. The optical holographic medium of any preceding clause, wherein one or more single tracks of the recording layer comprises multi-wavelength adjacent micro holograms.
17. The optical holographic medium of any preceding clause, wherein the optical holographic medium is responsive to recording wavelengths ranging from about 350nm to about 450nm.
18. The optical holographic medium of any preceding clause, wherein a material composition used for the optical holographic medium includes a Polyvinylcinnamate (PVCm) and a Bis(1-ethynyl-4-(phenylethynyl)benzene) bis(triphenylphosphine)Pd (II) (Pd-PE2).
19. A holographic system for processing information comprising:
   at least one laser for providing a laser beam; and
   a subsystem configured for multi-wavelength operation for retrieving data from a preformatted holographic medium and recording by modifying micro-holograms of the preformatted holographic medium.
20. The holographic system of any preceding clause, wherein the subsystem is configured for recording data using a single-wavelength high power laser source.
21. The holographic system of any preceding clause, wherein the subsystem retrieves data using one or more low power laser sources with multiple wavelength functionality.
22. The holographic system of any preceding clause, wherein the subsystem is further configured for reading micro-holograms with a plurality of wavelengths in adjacent layers in the preformatted holographic medium.
23. The holographic system of any preceding clause, wherein the subsystem is further configured for reading micro-holograms with a plurality of wavelengths in adjacent tracks in the preformatted holographic medium.
24. The holographic system of any preceding clause, wherein the subsystem is further configured for reading adjacent micro-holograms with a plurality of wavelengths in a single track in the preformatted holographic medium.
25. A method for processing information in a holographic medium, the method comprising:
   directing one or more laser beams with a plurality of wavelengths;
   providing a subsystem configured to switch between wavelengths and modulate the one or more laser beams; and
   recording adjacent micro-holograms in the holographic medium at different wavelengths.
26. The method of any preceding clause, further comprising tracking and transferring information from the holographic medium using one or more of readout laser beams corresponding to wavelengths used during recording.
27. The method of any preceding clause, further comprising recording a first set of layers having micro-holograms with a first wavelength and recording a second set of layers having micro-holograms in an interleaved manner using a second wavelength.
28. The method of any preceding clause, further comprising processing information of a plurality of layers of the holographic medium using a two-wavelength detector.
29. The method of any preceding clause, further comprising a single sided recording in a preformatted holographic medium using a single-wavelength high power laser source to modify existing holograms and reading data from the preformatted holographic medium using a low power laser source with multi-wavelength functionality.

## Claims

1. A holographic system (10) for recording and retrieving information comprising:
at least one laser for providing a laser beam; and
a subsystem (24) configured for multi-wavelength operation of said holographic system (10) and recording micro-holograms at different wavelengths in substantially non-overlapping volumes of a holographic medium (12).

2. The system (10) of claim 1, wherein the laser is a wavelength tunable blue-violet laser.

3. The system (10) of any preceding claim, further comprising (36): a controller; a plurality of laser sources; a plurality of optical elements and a plurality of detectors for recording or readout.

4. The system (10) of claim 3, wherein the plurality of detectors comprise in-phase and quadrature phase (I/Q) detectors for reading of a plurality of layers of the holographic medium.

5. The system (10) of any preceding claim, wherein the subsystem (24) is further configured for recording micro-holograms with a plurality of wavelengths in an interleaved manner in the holographic medium.

6. The system (10) of any preceding claim, wherein the subsystem (24) is further configured for recording micro-holograms with a plurality of different wavelengths in adjacent layers of the holographic medium.

7. The system (10) of any preceding claim, wherein the subsystem (24) is further configured for recording micro-holograms with a plurality of different wavelengths in adjacent tracks in a layer of the holographic medium.

8. The system (10) of any preceding claim, wherein the subsystem (24) is further configured for recording adjacent micro-holograms with a plurality of different wavelengths in a single track of any layer of the holographic medium.

9. The system (10) of any preceding claim, further comprising one or more of pick-up head devices with optical elements for reading and recording information from the holographic medium.

10. The system (10) of any preceding claim, wherein the one or more of pick-up head devices include lasers for directing one or more laser beams with a plurality of wavelengths through one or more optical paths.

11. An optical holographic medium (12) comprising:
a plurality of recording layers (14); and
a plurality of micro-holograms recorded with a plurality of wavelengths in an interleaved manner in the optical holographic medium.

12. The optical holographic medium (12) of claim 11, wherein the plurality of recording layers comprises one or more recording layers having a main data content recorded at a first wavelength and remaining layers includes an extended content recorded with a plurality of different wavelengths, wherein the holographic recording medium is read by a holographic system based on multi-wavelength functionality.

13. The optical holographic medium (12) of claim 11 or claim 12, wherein each of the recording layers comprises multi-wavelength micro-holograms with a multi-symbol alphabet arrangement for minimizing cross-talk.

14. A holographic system (10) for processing information comprising:
at least one laser for providing a laser beam; and
a subsystem (24) configured for multi-wavelength operation for retrieving data from a preformatted holographic medium and recording by modifying micro-holograms of the preformatted holographic medium.

15. A method for processing information in a holographic medium (12), the method comprising:
directing one or more laser beams with a plurality of wavelengths;
providing a subsystem (24) configured to switch between wavelengths and modulate the one or more laser beams; and
recording adjacent micro-holograms in the holographic medium at different wavelengths.
